# EUROPÄISCHE PATENTSCHRIFT

(11) **EP 2 716 980 B1**
(45) Veröffentlichungstag und Bekanntmachung des Hinweises auf die Patenterteilung: **28.11.2018**
(21) Anmeldenummer: 13187146.9
(22) Anmeldetag: 02.10.2013
(51) Int. Cl.: F24D 3/10, F16L 41/03, F16B 7/18

(54) **Rohrverteilersystem**
Pipe manifold system
Système de distribution par conduites

(30) Priorität: 02.10.2012 DE 102012019341
(43) Veröffentlichungstag der Anmeldung: 09.04.2014
(73) Patentinhaber: STRAUB KG, 73337 Bad Überkingen (DE)
(72) Erfinder: Straub,Hans Jakob, 73337 Bad Oeberkingen (DE)
(74) Vertreter: Fürst, Siegfried

(56) Entgegenhaltungen:
- EP-A1- 1 482 249
- WO-A1-2011/110351
- DE-A1-102007 010 116
- US-A1- 2007 170 272

## Beschreibung

Die Erfindung betrifft ein Rohrverteilersystem gemäß dem Oberbegriff des Anspruches 1. Ferner betrifft die Erfindung ein Verfahren zur Herstellung eines Gewindes an Teilen des Rohrverteilersystems.

Aus dem Stand der Technik sind Rohrverteilersysteme bekannt, bei denen mehrere Abgänge von einem Hauptrohr abzweigen. Diese Rohrverteilersysteme werden in Fachkreisen oft auch Heizkreisverteiler genannt. Ein Heizkreisverteiler wird zur Anbindung von Heizkörpern oder zur Anbindung von Fußboden- oder Wandheizungen an eine oder mehrere Hauptleitungen verwendet. Bei diesen Rohrverteilersystemen gibt es im Allgemeinen ein Hauptrohr für den Zulauf und ein Hauptrohr für den Rücklauf. Zur Verteilung, Überwachung, Steuerung und Regelung der Teilströme (Teil-Fluidströme) sind Anschlusselemente, Durchflussanzeigen, Ventile und Thermostate den Abgängen des Hauptrohres zugeordnet. An den jeweiligen Anschlusselementen wird die jeweilige weiterführende oder zurückführende Leitung des betreffenden Teil-Heizkreis bzw. Teil-Kühlkreis angeschlossen.

Der Heizkreisverteiler wird für die Verteilung des Massenstroms von der Haupt-/Steigleitung vom Heizkessel zu den einzelnen Radiatoren/Heizkörpern eingesetzt. Durch die zentrale Verteilung wird ein sternförmiger Anschluss der Heizkörper ermöglicht. Ein modifizierter Heizkreisverteiler wird auch für die Verteilung und Einregulierung (DIN EN 1264-4 "Hydraulischer Abgleich") des Massenstroms einzelner Niedertemperatur-Heizkreise bei Fußboden- oder Wandheizungen eingesetzt.

Diese Anschlusselemente, Durchflussanzeigen, Ventile und Thermostate werden nachfolgend jeweils als Funktionseinheit bezeichnet. Diese Funktionseinheiten wirken zum Beispiel in der Weise, dass zum Beispiel ein Teil eines Teilelementes des Ventils - beispielsweise ein Ventilteller - auf eine Fläche eines bei dem betreffenden Abgang angeordneten weiteren Teilelementes des Ventiles wirkt, wodurch der Durchfluss des Fluides (meistens Wasser) beeinflusst oder gemessen wird.

Die entsprechende Fläche ist gewissermaßen ein Ventilsitz. Der Ventilsitz bzw. das Teilelement mit dem Ventilsitz ist dabei in einem bei dem betreffenden Abgang angeordneten Anschlusselement aufgenommen oder bildet mit dem Anschlusselement zusammen ein Teilelement.

Nach dem Stand der Technik sind die Anschlusselemente und die Durchflussanzeigen, Ventile und Thermostate in dem Hauptrohr eingeschraubt und eingedichtet oder eingeklebt oder eingelötet, wie z.B. bei einem Warmwasserverteiler nach der DE 10 2007 010 116 A1 oder bei einem Rohrverteiler gemäß der EP-A1 1 482 249 oder wie ein Funktionselement gemäß der WO 2011/110351 A1.

Um die Funktionseinheiten einschrauben, einkleben oder einlöten zu können, müssen vorher sogenannte Aushalsungen an dem Hauptrohr angebracht werden, welche bei den das Hauptrohr partiell öffnenden Abgängen nach Außen oder nach Innen gerichtet sein können, und es muss auch noch, sofern für das Zusammenfügen eine Verschraubung gewählt ist, Gewinde in oder an diese Aushalsungen eingeschnitten oder eingerollt werden. Ferner müssen die betreffenden Anschlusselemente, in der Regel Abschnitte von deren Gehäuse, ebenfalls mit Gewinde versehen sein und der Abgang muss auch noch mit einer Dichtung, in der Regel ein O-Ring oder Dichtungsmasse bzw. Kleber, versehen sein, so dass insgesamt hohe Fertigungskosten und Montagekosten entstehen.

Für das Einkleben oder Einlöten sind die betreffenden Kontaktflächen an dem Teil der Funktionseinheit und dem Hauptrohr entsprechend dem gewählten Fügeverfahren vorzubereiten, was zumindest ein sorgfältiges Säubern und damit einen weiteren Zeitaufwand bei der Montage erfordert.

Zudem, in der Praxis kommt es auch immer wieder vor, dass unbefugte und kenntnisfremde Personen die Funktionseinheiten an den Abgängen gegen weniger geeignete Bauteile, also Bauteile geringerer Qualität oder geringerer Leistung oder geringerer Lebensdauer, austauschen. Dadurch war dann die Funktion der Durchflussanzeigen, Ventile und Thermostate nicht mehr in zuverlässiger Weise gewährleistet.

Daher musste das Anzugsmoment für die in das Hauptrohr eingeschraubten Teile / Funktionseinheiten höher sein, als das Anzugsmoment bei den Anschlüssen für die weiterführenden Rohre oder Schläuche. War dieses nicht der Fall, so konnte es beim Lösen eines Anschlusses von der weiterführenden Leitung auch zum Lösen der direkt im Hauptrohr eingeschraubten Bauteile kommen.

Um dieses zu verhindern, haben die besagten Personen diese Bauteile mit einem sehr hohen Anzugsmoment im Hauptrohr nachgezogen, welches oft zu Beschädigungen des Gewindes und/oder des Dichtungsmittels führte.

Bei Lötverbindungen wirkt sich das Vorhandensein unterschiedlicher Metalle und Legierungen nachteilig aus. Bei Anwesenheit eines Elektrolyten (z. B. Feuchtigkeit) entstehen galvanische Elemente wie ein Lokalelement, die zu verstärkter Korrosion führen können. Ein weiterer Nachteil sind zudem kalte Lötstellen. Kalte Lötstellen halten nur geringen mechanischen Belastungen stand. Aufgrund dessen können sowohl kleine Vibrationen oder Erschütterung der Lötstelle als auch Dehnungsbewegungen bei sich erwärmenden Bauteilen zu Funktionsstörungen führen. Um kalte Lötstellen auszuschließen müssen die Lötstellen aufwendig kontrolliert werden, wodurch die Herstellungskosten steigen, was ebenfalls von Nachteil ist.

Es ist deshalb Aufgabe der Erfindung die genannten Probleme zumindest zu reduzieren.

Erfindungsgemäß wird diese Aufgabe mit einem Rohrverteilersystem mit den Merkmalen des Anspruches 1 gelöst; die Ansprüche 2 bis 11 offenbaren Ausgestaltungsvarianten des Rohrverteilersystems. Zudem ist für die Herstellung eines Gewindes an wenigstens einem Abschnitt/Endbereich von Teilen des erfindungsgemäßen Rohrverteilersystems erfindungsgemäß ein Verfahren mit
den Merkmalen des Anspruches 12 vorgesehen; die Ansprüche 13 bis 15 offenbaren Ausgestaltungsvarianten des Verfahrens.

Die Erfindung betrifft ein Rohrverteilersystem für einen Fluidstrom mit mindestens einem zentralen Hauptrohr und mindestens einer Funktionseinheit zum Entleeren und zum Befüllen des Systems oder zum Absperren, zum Öffnen oder zum Regulieren eines Teilvolumenstromes, wobei die Funktionseinheit wenigstens aus einem ersten und einem zweiten Teilelement besteht und zur Hauptachse des Hauptrohres im Wesentlichen rechtwinklig und zueinander fluchtend angeordnet sind, und wobei das Hauptrohr im Bereich der mindestens einen Funktionseinheiten Aufweitungen mit mindestens zwei parallel zueinander angeordneten Fügeflächen aufweist. Das Hauptrohr ist zumindest im Fügebereich des mindestens einen zweiten Teilelements im Wesentlichen eben ausgebildet. Erfindungsgemäß ist das Hauptrohr zumindest im Fügebereich des mindestens einen zweiten Teilelements derart ausgebildet, dass dort keine störenden Aushalsungen ausgeformt sind.

Eine Variante der Erfindung ist ein Rohrverteilersystem für einen Fluidstrom mit mindestens einem zentralen Hauptrohr und mindestens einer Funktionseinheit zum Entleeren und Befüllen des Systems oder zum Absperren, zum Öffnen oder zum Regulieren eines Teilvolumenstromes, wobei die Funktionseinheit wenigstens aus einem ersten und einem zweiten Teilelement besteht und zur Hauptachse des Hauptrohres im Wesentlichen rechtwinklig und zueinander fluchtend angeordnet sind, wobei das Hauptrohr im Bereich der Funktionseinheiten Aufweitungen mit mindestens zwei parallel zueinander angeordneten Fügeflächen aufweist, bei dem das Hauptrohr zumindest im Fügebereich der zweiten Teilelemente im Wesentlichen eben und derart ausgebildet ist, dass dort keine Aushalsungen gebildet sind.

Durch die neue, erfinderische Gestaltung eines Rohrverteilersystems für einen Fluidstrom, d.h., dass im besagten Fügebereich an dem Hauptrohr keine Aushalsungen vorhanden sind, wird das Fließverhalten des in dem Hauptrohr bereitgestellten und von diesem aus über die Abgänge in Teilströme verteilten Fluids (Wärme- oder Kältemittel) weniger gestört, sodass insbesondere das Regulieren der Massenströme (hydraulischer Abgleich) störungsfreier, insbesondere feinfühliger, erfolgen kann. Zum Anderen können die äußeren Abmaße eines Rohrverteilersystemes durch das Fehlen der Aushalsungen, insbesondere von am Hauptrohr nach Außen abragenden Aushalsungen, kleiner gehalten werden.

Ein weiterer Vorteil besteht darin, dass durch die feste Anordnung von zumindestens Teilelementen der Funktionseinheiten an dem Hauptrohr ein unbeabsichtigtes und unberechtigtes Lösen von Bauteilen des Rohrverteilersystems verhindert wird. Zudem können die Herstellungs- und Montagekosten gesenkt werden, insbesondere die Montagekosten vor Ort bei der Installation der Rohrverteilersysteme in die Heizungsanlage oder Kühlanlage, insbesondere eines Gebäudes, zum Beispiel einer Fußbodenheizung oder Wandheizung. Zum Anderen wird die Montage vor Ort vereinfacht, was insbesondere für Heimwerker aber auch Installationsbetriebe vorteilig ist.

Nach einer Ausführungsvariante des neuen Rohrverteilersystems ist mindestens ein Teilelement der Funktionseinheiten mit dem Hauptrohr (1) verschmolzen, vorzugsweise durch Schweißung, insbesondere mittels Laserschweißen.

Nach einer weiteren Ausführungsvariante des neuen Rohrverteilersystems ist das zweite Teilelement ein spezielles Anschlusselement für einen Teilvolumenstrom und der dazugehörenden Leitung. Die speziellen Ausführungen werden weiter hinten in der Beschreibung genannt.

Bei einer weiteren Ausführungsvariante des neuen Rohrverteilersystems ist die das zweite Teilelement - also das Anschlusselement - beinhaltende Funktionseinheit ein Ventil oder eine Durchflussanzeige oder ein Thermostat.

Nach einer anderen Ausführungsvariante des neuen Rohrverteilersystems ist wenigstens ein Gehäuseteil einer Funktionseinheit unverlierbar und dicht mit dem Hauptrohr verbunden, vorzugsweise eines ersten Teilelementes, insbesondere das Teilelement einer Funktionseinheit, welches Stellglieder aufweist. Stellglieder sind zum Beispiel bei einem Ventil die Spindel mit Ventilteller oder bei einer Durchflussanzeige die Messspindel oder eine Regulierhülse.

Bei einer weiteren Ausführungsvariante des neuen Rohrverteilersystems besteht das Rohrverteilersystem aus mindestens einem Hauptrohr für einen Zulauf und mindestens einem Hauptrohr für den Rücklauf. Das Fluid ist in der Regel Wasser.

Nach einer anderen Ausführungsvariante des neuen Rohrverteilersystems, bei der die Funktionseinheit in Form eines Ventils mit einem Ventilsitz gebildet ist, wird dieser Ventilsitz von wenigstens einem Bereich des Hauptrohres gebildet.

Nach der Erfindung ist dabei vorteilhaft vorgesehen, dass der Ventilsitz relativ zur inneren Oberfläche des Hauptrohres erhaben ist und zur Längsachse des Hauptrohres hin gerichtet ist. Vorzugsweise ist der Ventilsitz ein ringförmiger Wall/Wulst, wobei der Wall im Bereich des Randes der jeweils vorgesehenen Öffnung des Hauptrohres angeordnet ist. Insbesondere ist an dem Randbereich der betreffenden Öffnung die Wulst ausgebildet, vorzugsweise durch Umformung.

Die Erfindung betrifft auch ein Verfahren zur Herstellung eines Gewindes für ein Rohrverteilersystem gemäß einem der Vorrichtungsansprüche, bei dem nach der Erfindung ein Rohrende des Anschlusselementes oder ein Rohrende des Hauptrohres derart umgebördelt wird, so dass der umgebördelte Abschnitt des Rohres wie eine zweite, äußere Lage auf der Oberfläche des Rohres zu liegen kommt und in bzw. an diese äußere Lage ein Gewinde angebracht ist.

Nach einer Ausführungsvariante dieses Verfahrens ist an wenigstens einem Endes des Hauptrohres ein Gewinde nach den vorgenannten Verfahrensschritten hergestellt. Vorzugsweise ist das Gewinde in die Oberfläche hinein gerollt wird.

Der Erfinder hat erkannt, dass es trotz der geringen Abstände zwischen dem Hauptrohr und den Abgängen als auch zwischen den Abgängen möglich ist, diese mittels eines thermischen Verbindungsverfahrens, mit dem Hauptrohr zu verschmelzen, ohne dass dabei einzelne Komponenten der Bauteile durch Hitzeeinwirkung Schaden nehmen. Dadurch sind die Abgänge unverlierbar und zugleich dicht. Dieses hat weiterhin den Vorteil, dass mit einem Arbeitsgang die Abgänge bzw. die Bauteile des Systems montiert werden können. Die Fertigungskosten und die Montagekosten sind geringer.

Ein Austauschen von Funktionseinheiten und deren Bauteilen bzw. Abgängen gegen solche mit geringerer Qualität oder geringerer Leistung oder geringerer Lebensdauer ist nach der Herstellung eines Rohrverteilersystems gemäß der Erfindung nicht mehr möglich.

Garantien auf ein Rohrverteilersystem und Ansprüche aus diesen Garantien sind bei einem Rohrverteilersystem gemäß der Erfindung wesentlich besser kontrollierbar und Unberechtigtes deutlicher nachweisbar, als dies bei Rohrverteilersystemen nach dem Stand der Technik erfolgen kann.

Die Erfindung wird folgend anhand von in den Figuren gezeigten schematischen, nicht einschränkenden Darstellungen näher erläutert. Es zeigen:
- Figur 1a bis 1d: eine Übersicht über das erfindungsgemäße Rohrverteilersystem;
- Figur 2a: eine Schnittdarstellung von einer Ventil-Einheit aus Figur 1b;
- Figur 2b: eine Schnittdarstellung von einer Durchflussmesser-Einheit nach Fig. 1d;
- Figur 3a: eine neue Kombination von einer Befüllungs-, Entleereinheit und Entlüftungseinheit sowie einem Ventil;
- Figur 3b: eine neue Kombination von einer Befüllungs-, Entleereinheit und Entlüftungseinheit sowie einer Durchflussanzeige;
- Figur 4a: ein einfach umgebördeltes Rohr mit Gewinde eines Anschlusselementes;
- Figur 4b: ein zweifach umgebördeltes Rohr mit Gewinde eines Anschlusselementes;
- Figur 5a-5c: drei Stellpositionen eines Ventiltellers relativ zu einem ebenen Hauptrohr-Grund an dessen Innenfläche;
- Figur 5d-5g: das Detail E aus der Figur 5c in mehreren Ansichten;
- Figur 6: eine neue Kombination von einem Ventil und einer Durchflussanzeige;
- Figur 7: eine Alternative einer Ventilform zu den Figuren 5a bis 5g.

Den nachfolgenden Ausführungen soll vorausgestellt werden, dass Begriffe wie "oben", "unten", "links" und "rechts" sich nur auf die jeweilige Darstellung in den Figuren beziehen und dass die tatsächliche Anordnung von diesen Begrifflichkeiten abweichen kann. Auch können die Dimensionierungen der realen Bauteile von den Dimensionierungen in den Figuren abweichen. Weiterhin wird hervorgehoben, dass gleiche Bauteile in den verschiedenen Figuren immer mit den gleichen Bezugszeichen versehen sind. Es soll auch hervorgehoben werden, dass in der Beschreibung nicht erwähnte Bezugszeichen und Bauteile, durch die Bezugszeichenliste definiert werden. Auch auf Schraffuren wurde in den Schnittzeichnungen teilweise verzichtet, weil durch die zum Teil feinen Strukturen der Bleche eine feine Schraffur gewählt werden müsste und dadurch ein Schwarzin-Schwarz entstehen könnte. Ohnehin sind die Schnittflächen für den Durchschnittsfachmann ohne Weiteres zu erkennen.

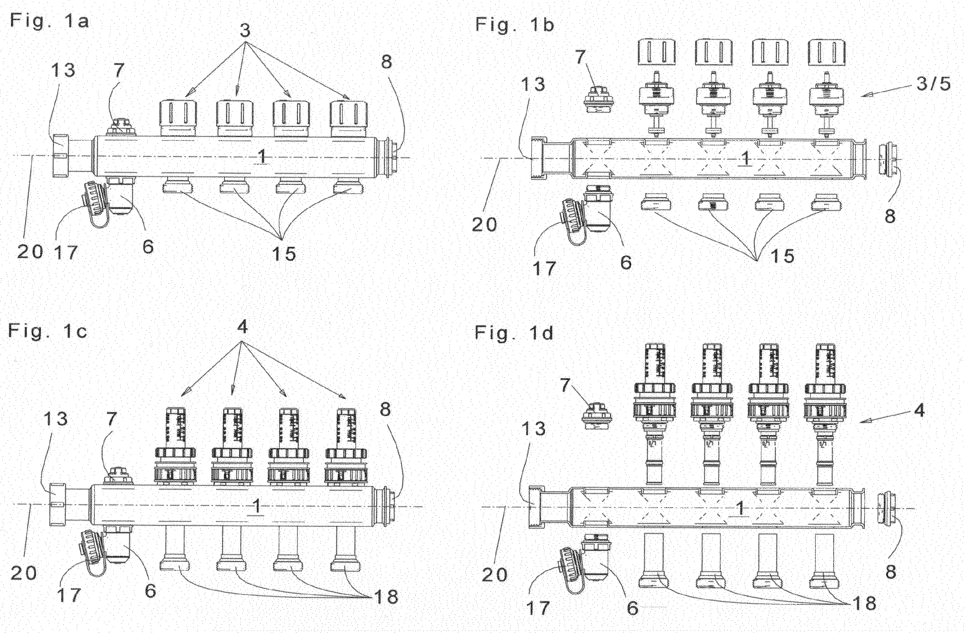

In der Figur 1a ist ein Hauptrohr 1 zu sehen, welches an der Oberseite mehrere Ventile 3 zur Regelung eines Fluides aufweist. An der Unterseite des Hauptrohres 1 sind Anschlusselemente 15 angeordnet, die axial den Ventilen 3 gegenüber liegen. An den Anschlusselementen 15 werden die weiterführenden Leitungen - beispielsweise für eine Fußbodenheizung - angeschlossen. Das Hauptrohr 1 kann mittels einer Überwurfmutter 13 mit weiteren, - hier nicht dargestellten Rohren - verbunden werden. Das Ende des Hauptrohres 1 ist mit einem Verschlussstopfen 8 versehen. Ein Entleerungselement 6 zum Befüllen oder auch Entleeren des Rohrverteilersystems ist an der Unterseite des Hauptrohres 1 angebracht. Ist das System gefüllt, so wird ein hier nicht dargestellter Hahn am Entleerungselement 6 geschlossen. Eine Verschlusskappe 17 verhindert das Verschmutzen des Anschlussgewindes an dem Entleerungselement 6. Oberhalb des Entleerungselementes 6 ist ein Entlüftungselement 7 angeordnet, welches häufig auch als vollautomatische Entlüftung ausgebildet ist.

In der Figur 1c sind an einem anderen Hauptrohr 1 anstelle von Ventilen 3, Durchflussanzeigen 4 angeordnet.

Um das Zusammenwirken der Ventile 3 bzw. der Durchflussanzeigen 4 mit den Anschlusselementen 15 besser zeigen zu können, muss man sich den Schnitt- und zugleich Explosionszeichnungen 1b und 1d zuwenden, wobei 1b dem Schnitt zur Figur 1a und Figur 1d dem Schnitt zur Figur 1c entsprechen.

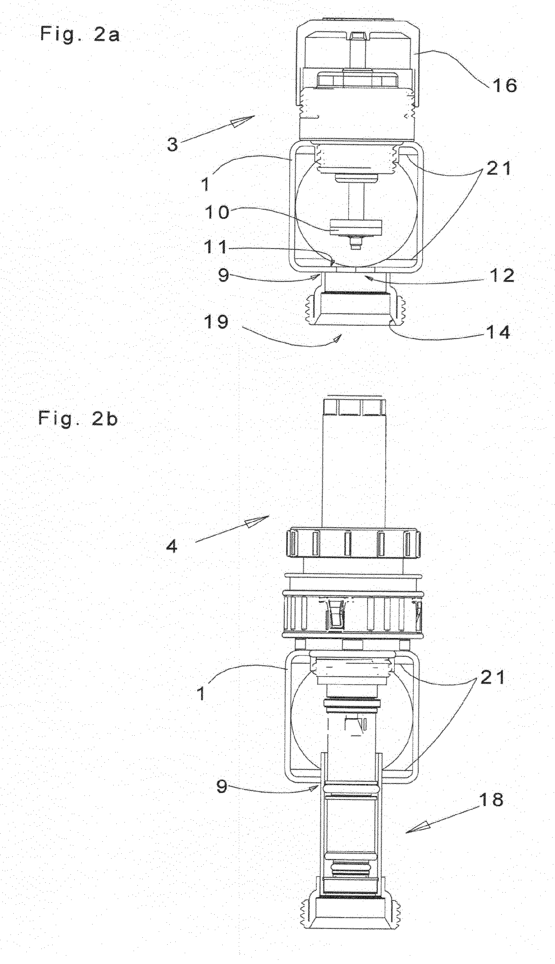

In den Figuren 1b und 1d kann man erkennen, dass die Hauptrohre 1 mit Aufweitungen versehen sind, so dass die an sich runden Hauptrohre 1 oben und unten je eine plattenförmige Montagefläche - eine Fügefläche für Funktionseinheiten - erhalten. Mit anderen Worten: Die Aufweitungen sind die Bereiche des ursprünglichen Hauptrohres 1, die zumindest in der quer zur Hauptachse 20 liegenden Medianebene der Aufweitung schließlich einen im Wesentlichen quadratischen Querschnitt dieses Rohres darstellen, siehe hierzu in die Figuren 2a und 2b. Da die Aufweitungen mit Bezugszeichen nicht eindeutig darstellbar sind, wurde hier auf ein Bezugszeichen verzichtet. Abweichend von dem hier und auch in den nachfolgenden Figuren dargestellten quadratischen Querschnitten, können auch sechseckige, oder auch andere, mit mindestens zwei parallel und diametral angeordneten Flächen versehene Querschnitte zum Einsatz kommen. Im Bereich der Aufweitungen entstehen im Zusammenwirken mit dem runden Rohr 1 - wie in der Technik an sich bekannt - Lichtkanten 21, welche hier als kreuzförmigen Linien in Erscheinung treten. Die Aufweitungen im oberen Bereich des Hauptrohres 1 sind zudem mit nach innen gerichteten Aushalsungen und Gewinde versehen. Mittels dieser Gewinde können die Teilelemente der Funktionseinheiten - wie Durchflussanzeigen 4, Ventile 3, Thermostate 5, Entleerungselemente 6 und Entlüftungselemente 7 - in das Hauptrohr 1 eingeschraubt werden. Da speziell die Ventile 3 und 5 sowie die Durchflussanzeigen 4 das ihnen zu ihrer Systemachse gegenüberliegende andere Teilelement, die Anschlusselemente 15, 18, 19 oder die Öffnung 12 benötigen, um die volle Funktion der Funktionseinheiten zu gewährleisten, bilden sie nur mit diesen Elementen die Funktionseinheit. Kennzeichnend ist für die unten am Hauptrohr angeordneten Teilelemente, für die Anschlusselemente 15, 18, 19, dass sie alle ohne Aushalsungen des Hauptrohres 1 montiert werden. Eine detaillierte Beschreibung erfolgt hierzu noch bei den anderen Figuren. Gemäß der Erfindung werden zumindest die Anschlusselemente 15 und 18 mit dem Hauptrohr 1 verschmolzen. Vorzugsweise werden auch die ersten, oben am Hauptrohr 1 angeordneten Teilelemente der Funktionseinheiten mit dem Hauptrohr 1 verschmolzen, vorzugsweise Abschnitte von deren Gehäuse. Aus diesem Grunde werden deshalb hitzeempfindliche Bauteile (Schraubkappen, Stellringe usw.) der ersten (oberen) Teilelemente erst nach dem Verschmelzen mit dem Hauptrohr 1 an der Funktionseinheit angebracht. Das Verschmelzen kann mittels verschiedener Schweißtechniken erfolgen. Dazu ist Voraussetzung, dass sowohl das Hauptrohr 1 und die Teilelemente einen ähnlichen Werkstoff aufweisen. Eine bevorzugte Schweißtechnik ist das Laserschweißen.

In den Figuren 2a und 2b kann man sowohl den aufgeweiteten, quasi quadratischen und zugleich den ursprünglichen kreisrunden Querschnitt des Hauptrohres 1 sehen. Durch die Aufweitung des Rohrquerschnittes an dieser Stelle entstehen die Lichtkanten 21. Ein Ventilteller 10 des Ventiles 3 ist in einem definierten Abstand zu einer Öffnung 12 des Hauptrohres 1 und erzeugt so einen definierten Durchfluss des Teilvolumenstroms des Fluides. Das Anschlusselement 19 ist nicht mittels einer Aushalsung - ähnlich wie bei dem oberen Teilelement des Ventils 3 - mit dem Hauptrohr 1 verbunden, sondern ist von außen auf die Oberfläche des Hauptrohres 1 mittels einer Schweißnaht 9 aufgeschweißt. Wäre hier - wie beim Stand der Technik - ein in das Hauptrohr 1 hineinragender Rohrabschnitt, der je nach Anzugsmoment oder Nachgiebigkeit eines Dichtungsmittels mehr oder weniger nachgibt und/oder das hineinragende Rohrende hätte keinen sauberen Rand, so wäre die Dichtungs- oder Steuerungs- oder Regelungsfunktion nicht einwandfrei gewährleistet. Das obere Teilelement des Ventils 3 ist hier mittels eines Gewindes in das Hauptrohr 1 eingeschraubt. Wie bereits erwähnt, kann im Rahmen der Erfindung dieses obere Teilelement auch mit dem Hauptrohr 1 verschmolzen sein. Um das obere Teilelement hierbei nicht zu beschädigen, müssen alle leicht lösbaren Teile hitzebeständig sein. D.h., dass die Ventilkappe 16, die üblicherweise aus Kunststoff ist, erst nach dem Abkühlen des Teilelementes angebracht werden darf.

In der Figur 2a ist auch noch eine besondere Ausgestaltung des Gewindes am Anschlusselement 19 zu sehen. Weil das Rohr-Material des Anschlusselementes auch, wie das Hauptrohr 1, zwecks Materialkostenein-sparung und Gewichtseinsparung dünnwandig ist, wurde das Rohrende in einem vorhergehenden Arbeitsgang derart umgebördelt, dass das Material dort zweilagig wurde und dort ein Gewinde angeordnet ist. Somit wird zwar in diesem Bereich die äußere Lage durch das Gewinde geschwächt, jedoch wird diese äußere Lage durch die innere Lage gestützt. Gegenüber dem Stand der Technik (WO2011/110351 A1), bei dem ein Gewindering auf das Rohrende geschoben wird und der Gewindering dann durch eine Aufweitung des Rohrende mehr oder weniger hält, wird bei der erfinderischen Lösung kein zusätzlicher Gewindering benötigt. Das Gewinde sitzt drehfest auf dem Rohr, wodurch die Fertigungskosten sinken und die Zuverlässigkeit einer Verbindung ist in einem höheren Maß gewährleistet.

Auch ist in der Ausführung nach Figur 2b die definierte Lage des Anschlusselementes 18 für das Funktionieren der Durchflussanzeige 4 von großer Bedeutung. Wie man sehen kann, ragt dort das Anschlusselement 18 etwas in das Hauptrohr 1 hinein und zugleich tauchen auch Teile des Durchflussmessers 4 in dieses Anschlusselement 18 ein. Über nicht näher bezeichnete Öffnungen in dem unteren Schaft der Durchflussanzeige 4 strömt das Fluid in selbige hinein und strömt nach unten weiter. Dabei schleppt das Fluid einen federbelasteten Stift mit nach unten, wodurch ein oben sichtbarer Anzeigestift die Anzeige des Durchflusses vornimmt. Damit kein Leckagestrom zwischen dem Anschlusselement 18 und dem Schaft der Durchflussanzeige 4
zustande kommt, ist hier mindestens eine Dichtung angebracht. Um ein Klemmen des Schaftes im Anschlusselement 18 zu vermeiden, ist eine hohe Genauigkeit an Konzentrizität und Fluchtung zwischen Durchflussanzeige 4 und Anschlusselement 18 erforderlich. Deshalb ist es auch hier vorteilhaft, wenn das Anschlusselement 18 steif und unlösbar mit dem Hauptrohr 1 verbunden ist.

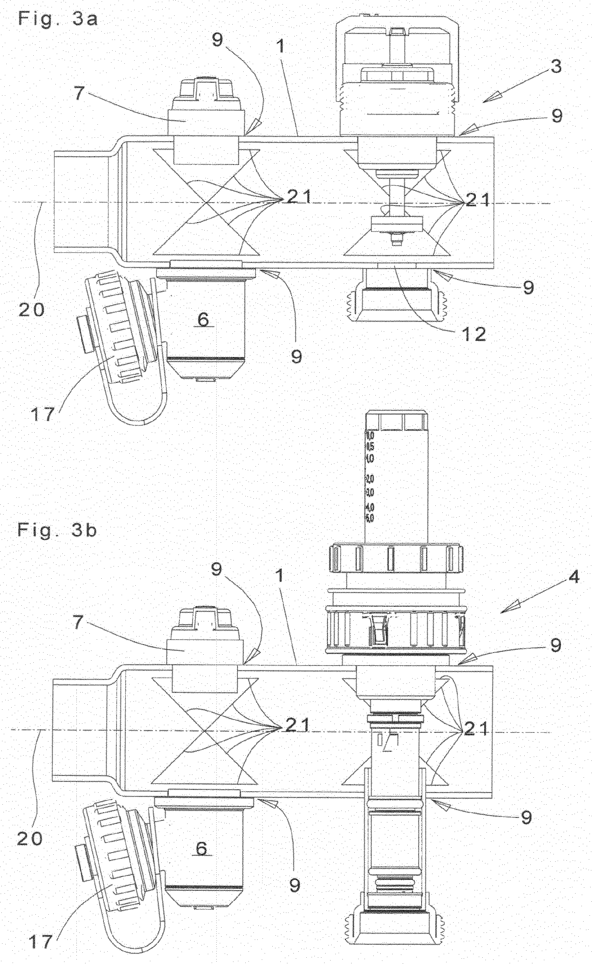

In den Figuren 3a und 3b sind ein Entleerungselement 6 und ein Entlüftungselement 7 in Kombination mit den bereits erläuterten Ventilen 3 und Durchflussanzeigen 4 zu sehen. In den Figuren sind jetzt das Ventil 3 und der Durchflussanzeiger 4 ohne Gewinde, aber mittels Verschweißen 9 mit dem Hauptrohr 1 verbunden. Dieses ist daran zu erkennen, da das Hauptrohr 1 für die oberen Teilelemente keine nach innen gerichteten Aushalsungen aufweist. Auch die Entlüftungselemente 7 - vorzugsweise als automatische Entlüfter ausgebildet - und die Entleerungselemente 6 sind mit dem Hauptrohr 1 verschweißt. Wie bereits erwähnt, dürfen nicht hitzebeständige Teile erst nach dem Schweißen und dem anschließenden Abkühlen an den Funktionseinheiten 3, 4, 6 und 7 angebracht werden.

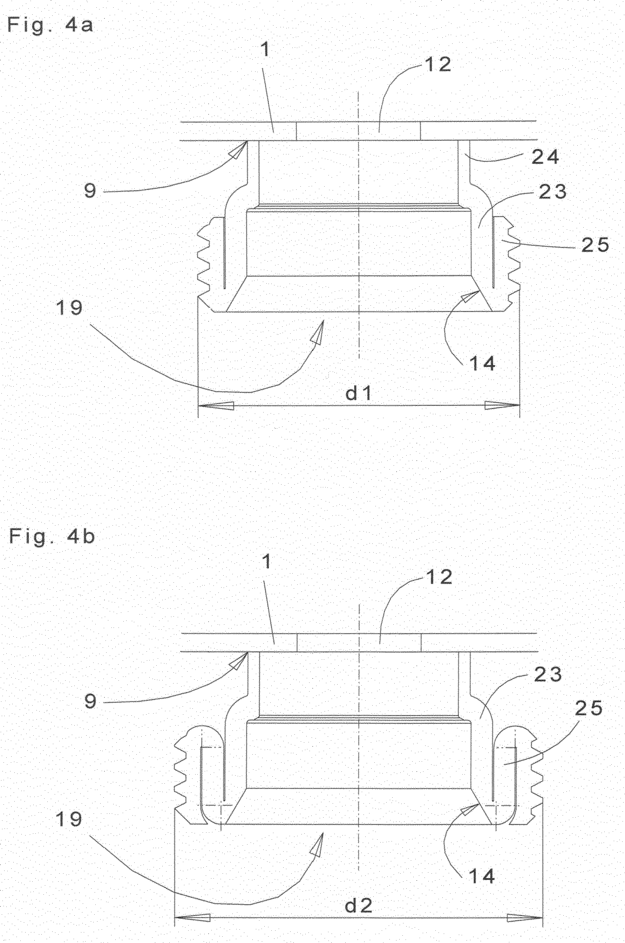

Mit den Figuren 4a und 4b soll detailliert auf das erfindungsgemäß hergestellte Gewinde eingegangen werden.

Ein Anschlusselement 19 ist hier in seinem Montage-Endzustand an einem Hauptrohr 1 zu sehen. Das untere Ende des Anschlusselementes 19 ist vorher in einer separaten Maschine zunächst aufgeweitet worden. Danach wurde ein Teil des
Rohres derart umgebördelt, dass eine äußere Lage 25 auf einer inneren Lage 23 des Rohres des Anschlusselementes 19 zu liegen kommt. Wenn dann in die äußere Lage 25 ein Gewinde eingebracht wird (geschnitten oder gerollt), so wird zwar die äußere Lage 25 geschwächt, aber wiederum durch die innere Lage 23 gestützt. An der inneren Lage 23 ist endseitig innenseitig ein Eurokonus 14 angeordnet.

Mit einem weiteren Bördelvorgang zwischen dem ersten Bördeln und dem Gewinde anbringen, kann man bei gleichem Ausgangsdurchmesser des Rohres sogar verschiedene Anschlussgewinde erzeugen, was durch die unterschiedlichen Durchmesser d1 und d2 angedeutet wird.

In einem anderen, etwas abgewandelten Verfahren wird das Rohr nicht ursprünglich auf geweitet, sondern der Abschnitt 24, welcher später dem Hauptrohr 1 näher liegt, wird in seinem Durchmesser gestaucht und/oder in die Länge gestreckt. Dieses wird in den Figuren auch durch die unterschiedlichen Wandstärken angedeutet.

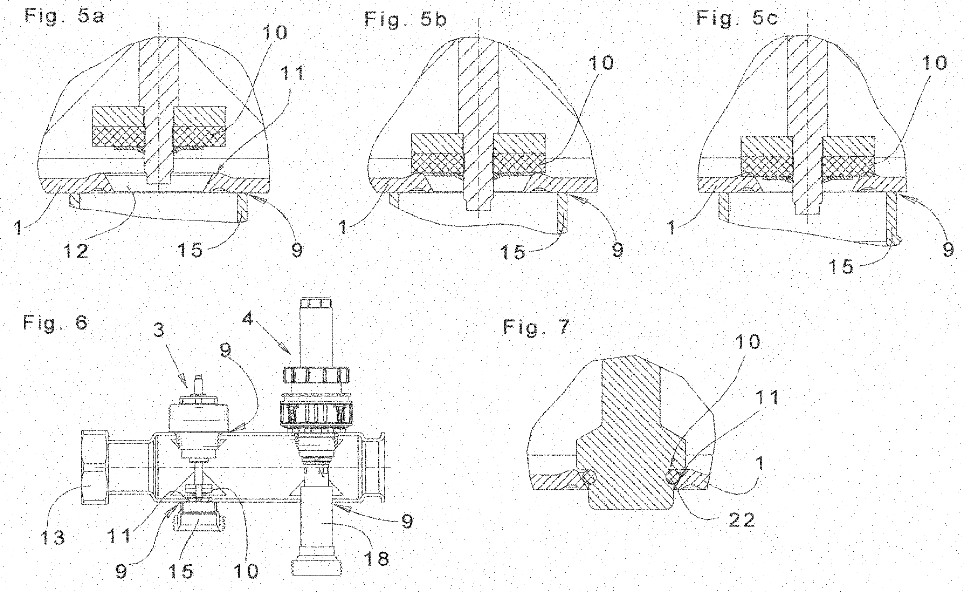

Mit den Figuren 5a bis 5c wird eine Öffnung 12 - wie sie schon in den Figuren 2a, 3a, 4a und 4b zu sehen ist - in einer besonderen Ausgestaltung gezeigt. Hier ist in der Unterseite der Wand des Hauptrohres 1 nicht nur eine Öffnung 12 hinein gestanzt worden, sondern am Rand der Öffnung 12 ist ein etwas erhabener Wall 30 (Wulst) für den Ventilsitz 11 angeformt worden und zugleich eine kegelförmige Stauchung oder Streckung des Randes der Öffnung 12 erfolgt. Im Wesentlichen sind die Öffnung 12 bzw. der Ventilsitz 11 aber eben ausgebildet. Man kann nicht von einer Aushalsung des Hauptrohres 1 nach Innen oder Außen sprechen, denn der Ventilsitz 11 erhebt sich mit einer Höhe 30h weniger als die Wandstärke 1h des Hauptrohres 1 über die Innenfläche 1b des Hauptrohres 1 hinaus. Die Ausgestaltung des Ventiles in den Figuren 5a bis 5c muss an sich nicht näher erläutert werden, weil sie - abgesehen vom Ventilsitz 11 - dem Stand der Technik entspricht.

Nach der Erfindung ist der Wall/die Wulst 30 ringförmig bei dem Rand der betreffenden Öffnung 12 vorgesehen vorzugsweise ist der Rand selbst als Wall/Wulst 30 ausgebildet, vorzugsweise durch Umformung.

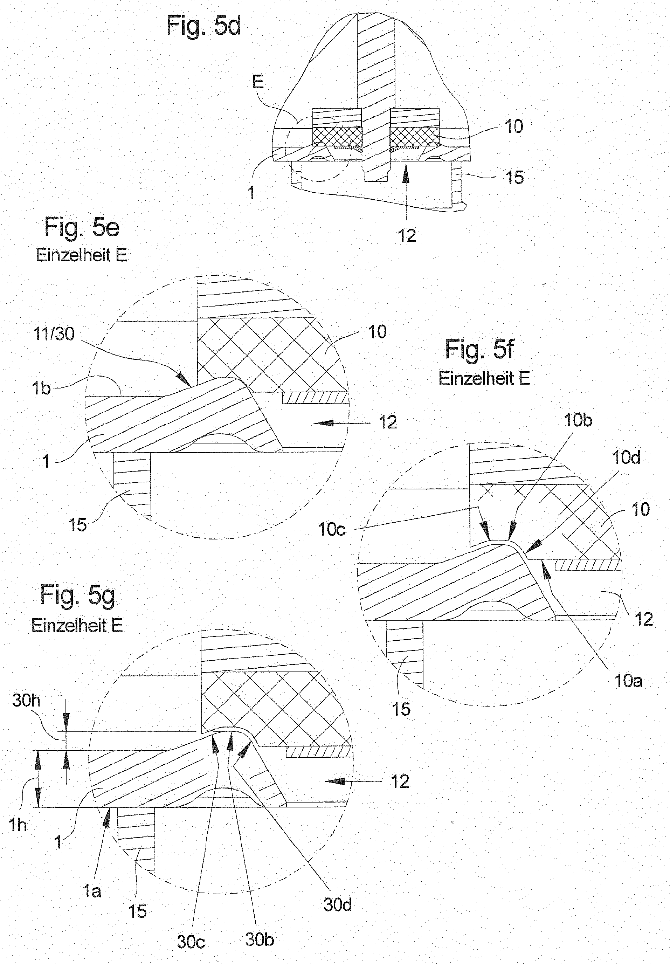

Details des Wall/Wulst 30 sind in den Figuren 5d bis 5g schematisch gezeigt. Die Figur 5d ist eine Kopie der Figur 5c, in der mit einem strichpunktierten Kreis der Bereich/die Einzelheit E markiert ist, welche in den Figuren 5e bis 5g vergrößert dargestellt ist, sodass Einzelheiten des wulstförmigen Walles 30, welcher ringförmig die Öffnung 20 umgibt, und des Ventiltellers 10 erkennbar sind.

In der Figur 5e ist diese Einzelheit E aus der Figur 5d so vergrößert dargestellt, dass deutlich die Anlage des Ventiltellers 10 an dem Wall 30 zu sehen ist. Der Ventilteller 10 ist derart an den Wall 30 angedrückt, dass in dem Ventilteller eine konkave Einformung, eine Einbuchtung, geformt ist. Der Ventilteller 10 besteht aus einen im Wesentlichen elastischen Material, sodass beim Lösen des Ventiltellers von dem Wall die konkave Einformung verschwindet.

Das Besondere/Erfindungsgemäße an diesem Ventilsitz in Form eines wulstartigen Walles 30 ist die Anordnung eines mittleren Bereiches 30b, welcher im Querschnitt gesehen, siehe hierzu Figur 5g, krummlinig ist, mit seitwärts jeweils abfallenden Flanken 30c und 30d. Die Flanke 30c ist von der Innenfläche 1b des Hauptrohres 1 ansteigend und die Flanke 30d fällt zur Öffnung 12 hin ab. Die Kontur der ansteigenden Flanke 30c und der abfallenden Flanke 30d kann, im Querschnitt gesehen, geradlinig oder krummlinig sein oder eine Kombination aus einem geradlinigen und einem krummlinigen Abschnitt. In der Figur 5g ist der Kontakt zwischen dem Wall 30 und dem Ventilteller 10 gemäß der Darstellung in der Figur 5e nochmals gezeigt, wobei hier jedoch, in der Figur 5g, zur besseren visuellen Darstellung zwischen beiden Kontaktflächen ein Spalt eingezeichnet wurde, welcher in Wirklichkeit bei dem in der Figur 5e gezeigten Kontakt natürlich nicht vorhanden ist.

In der Figur 5f ist ebenfalls der Kontakt zwischen dem Wall 30 und dem Ventilteller 10 gemäß Darstellung nach Figur 5e gezeigt. Auch in dieser Darstellung wurde zur besseren visuellen Betrachtung ein Spalt zwischen den Kontaktflächen angeordnet, der in Wirklichkeit jedoch nicht vorhanden ist. Die von den einzelnen Abschnitten des Walls 30, der ansteigenden Flanke 30c, dem mittleren Abschnitt 30b und der abfallenden Flanke 30d in der Stirnfläche 10a des Ventiltellers 10 bei dem betreffenden Kontakt geformte Einbuchtung/Einformung hat entsprechende Abschnitte 10b, 10c und 10d, also den äußeren Abschnitt 10c, den mittleren Abschnitt 10b und den inneren, zur Öffnung 12 hin gelegenen Abschnitt 10d.

Durch diese erfindungsgemäße Ausgestaltung des Ventilsitzes entstehen quasi drei Dichtflächen, sodass eine zuverlässige Abdichtung, auch bei hohen Drücken in dem Rohrverteilungssystem, insbesondere in dem Hauptrohr 1, gewährleistet ist.

Die Figur 6 ist im Wesentlichen eine Kombination der Figuren 3a und 3b, nur mit der Besonderheit, dass hier die Öffnung 12 mit dem Ventilsitz 11 in der Weise ausgestaltet ist, wie sie in den Figuren 5a bis 5c gezeigt ist.

In der Figur 7 wird eine Alternative zum Ventilsitz 11 der Figuren 5a bis 5c gezeigt. Hier wird das Ventil anstelle eines ebenen Ventiltellers mit einem O-Ring 22 verschlossen, dessen Ventilsitz auf dem Konus der Öffnung 12 aufsitzt.

Die Erfindung ist nicht auf die vorgenannten und beschriebenen Ausführungsformen/Ausführungsvarianten beschränkt. Die Erfindung umfasst auch ein Rohrverteilungssystem, welches einzig aus einem Hauptrohr besteht, bei dem der Ventilsitz und der Ventilteller eines Ventiles bei der im Hauptrohr vorgesehenen betreffenden Öffnung angeordnet ist und eine Form gemäß Ausführungsvariante nach den Figuren 5a bis 5g oder der Ventilteller eine Form gemäß Ausführungsvariante nach der Figur 7 hat.

### Bezugszeichenliste

- 1: Hauptrohr
- 1a: Mantelfläche (von Pos. 1)
- 1b: Innenfläche (von Pos. 1)
- 1h: Wandstärke (von Pos. 1)
- 2: Funktionseinheit
- 3: Ventil
- 4: Durchflussanzeige
- 5: Thermostat
- 6: Entleerungselement
- 7: Entlüftungselement (vollautomatische Entlüftung)
- 8: Verschlussstopfen
- 9: Schweißnaht
- 10: Ventilteller
- 10a: Stirnfläche (von Pos. 10)
- 10b: mittlerer Abschnitt
- 10c: äußerer Abschnitt
- 10d: innerer Abschnitt
- 11: Ventilsitz
- 12: Öffnung
- 13: Überwurfmutter
- 14: Innenkonus (Eurokonus)
- 15: Anschlusselement erster Art für Teilvolumenstrom (Ventilsitz 11)
- 16: Ventilkappe
- 17: Verschlusskappe
- 18: Anschlusselement zweiter Art für Teilvolumenstrom (für Pos. 4)
- 19: Anschlusselement dritter Art für Teilvolumenstrom
- 20: Hauptachse eines Hauptrohres
- 21: Lichtkante
- 22: O-Ring
- 23: innere Lage
- 24: Abschnitt
- 25: äußere Lage
- 30: Wulst (ringförmig, um Pos. 12)
- 30b: mittlerer Abschnitt (von Pos. 30)
- 30c: ansteigende Flanke (von Pos. 30)
- 30d: abfallende Flanke (von Pos. 30)
- 30h: Höhe der Wulst

## Patentansprüche

1. Rohrverteilersystem für einen Fluidstrom mit mindestens einem zentralen Hauptrohr (1) und mindestens einer Funktionseinheit (3; 4; 5; 6; 7) zum Entleeren und Befüllen des Systems oder zum Absperren, zum Öffnen oder zum Regulieren eines Teilvolumenstromes, wobei die Funktionseinheit (3; 4; 5; 6; 7) wenigstens aus einem ersten und einem zweiten Teilelement besteht, welche zur Hauptachse (20) des Hauptrohres (1) im Wesentlichen rechtwinklig und zueinander fluchtend angeordnet sind, wobei das Hauptrohr im Bereich der mindestens einen Funktionseinheit (3; 4; 5; 6; 7) Aufweitungen mit mindestens zwei parallel zueinander angeordneten Fügeflächen aufweist,
wobei
das Hauptrohr (1) zumindest im Fügebereich des mindestens einen zweiten Teilelements (15; 18; 19; 12) im Wesentlichen eben ausgebildet ist,
**dadurch gekennzeichnet, dass**
das Hauptrohr (1) zumindest im Fügebereich des mindestens einen zweiten Teilelements (15; 18; 19; 12) derart ausgebildet ist, dass keine Aushalsungen gebildet sind.

2. Rohrverteilersystem nach Anspruch 1,
**dadurch gekennzeichnet, dass**
mindestens ein Teilelement der
Funktionseinheiten (3; 4; 5; 6; 7) mit dem Hauptrohr (1) verschmolzen ist.

3. Rohrverteilersystem nach Anspruch 1 oder 2,
**dadurch gekennzeichnet, dass**
das zweite Teilelement ein Anschlusselement (15; 18; 19) für einen Teilvolumenstrom und der dazugehörenden Leitung ist.

4. Rohrverteilersystem nach Anspruch 1 oder 3,
**dadurch gekennzeichnet, dass**
mindestens eines der Teilelemente unverlierbar und dicht mit dem Hauptrohr (1) verbunden ist

5. Rohrverteilersystem nach mindestens einem der Ansprüche 1 bis 4,
**dadurch gekennzeichnet, dass**
wenigstens ein Gehäuseteil einer
Funktionseinheit (3; 4; 5; 6; 7) unverlierbar und dicht mit dem Hauptrohr (1) verbunden ist.

6. Rohrverteilersystem nach mindestens einem der Ansprüche 3 bis 5,
**dadurch gekennzeichnet, dass**
die das zweite Teilelement - also ein Anschlusselement (15; 18; 19) - beinhaltende Funktionseinheit (3; 4; 5; 6; 7) ein Ventil (3) oder eine Durchflussanzeige (4) oder ein Thermostat (5) ist.

7. Rohrverteilersystem nach mindestens einem der Ansprüche 1 bis 6,
**dadurch gekennzeichnet, dass**
das Rohrverteilersystem aus mindestens einem Hauptrohr (1) für einen Zulauf und mindestens einem Hauptrohr (1) für den Rücklauf besteht.

8. Rohrverteilersystem nach mindestens einem der Ansprüche 1 bis 7,
**dadurch gekennzeichnet, dass**
das Fluid aus Wasser besteht.

9. Rohrverteilersystem nach mindestens einem der Ansprüche 1 bis 8,
**dadurch gekennzeichnet, dass**
die Funktionseinheit in Form eines Ventils (3) mit einem Ventilsitz (11) versehen ist und dieser Ventilsitz (11) von wenigstens einem Bereich des Hauptrohres (1) gebildet ist.

10. Rohrverteilersystem nach Anspruch 9,
**dadurch gekennzeichnet, dass**
der Ventilsitz (11) relativ zur inneren Oberfläche des Hauptrohres (1) erhaben ist und zur Längsachse des Hauptrohres (1) hin gerichtet ist.

11. Rohrverteilersystem nach Anspruch 10,
**dadurch gekennzeichnet, dass**
der Ventilsitz (11) eine ringförmige Wulst (30) ist, wobei die Wulst (30) im Bereich des Randes der jeweils vorgesehenen Öffnung (12) des Hauptrohres (1) angeordnet ist, vorzugsweise den Randbereich bildet.

12. Verfahren zur Herstellung eines Gewindes an Teilen eines Rohrverteilersystems nach einem der Ansprüche 1 bis 11,
wobei
ein Rohrende des Anschlusselementes (15, 18; 19)_ oder ein Rohrende des Hauptrohres (1) derart umgebördelt wird, so dass der umgebördelte Abschnitt des Rohres wie eine zweite, äußere Lage (25) auf der Oberfläche des Rohres zu liegen kommt und in diese äußere Lage (25) das Gewinde angebracht ist.

13. Verfahren nach Anspruch 12,
**dadurch gekennzeichnet, dass**
das Gewinde an einem Anschluss für einen Teilvolumenstrom angebracht ist.

14. Verfahren nach Anspruch 12,
**dadurch gekennzeichnet, dass**
das Gewinde an einem axialen Ende des Hauptrohres (1) angebracht ist.

15. Verfahren nach mindestens einem der Ansprüche 12 bis 14,
**dadurch gekennzeichnet, dass**
das Gewinde in die Oberfläche der betreffenden äußeren Lage (25) hinein gerollt wird.

## Claims

1. Pipe distributor system for a fluid flow with at least one central main pipe (1) and at least one functional unit (3; 4; 5; 6; 7) for emptying and filling the system or blocking, opening or regulating a part volume flow, wherein the functional unit (3; 4; 5; 6; 7) consists of at least a first and a second part element, which are arranged substantially at right angles to the main axis (20) of the main pipe (1) and in alignment with one another, wherein the main pipe has in the region of the at least one functional unit (3; 4; 5; 6; 7) widenings with at least two joint surfaces arranged parallel to one another, and wherein the main pipe (1) is formed to be substantially planar at least in the joint region of the at least one second part element (15; 18; 19; 12), **characterised in that** the main pipe (1) is formed in such a way at least in the joint region of the at least one second part element (15; 18; 19; 12) that no projecting necks are formed.

2. Pipe distributor system according to claim 1, **characterised in that** at least one part element of the functional units (3; 4; 5; 6; 7) is fused with the main pipe (1).

3. Pipe distributor system according to claim 1 or 2, **characterised in that** the second part element is a connecting element (15; 8; 19) for a part volume flow and the associated line.

4. Pipe distributor system according to claim 1 or 3, **characterised in that** at least one of the part elements is captively and sealingly connected with the main pipe (1).

5. Pipe distributor system according to at least one of claims 1 to 4, **characterised in that** at least one housing part of a functional unit (3; 4; 5; 6; 7) is captively and sealingly connected with the main pipe (1).

6. Pipe distributor system according to at least one of claims 3 to 5, **characterised in that** the functional unit (3; 4; 5; 6; 7) including the second part element - thus a connecting element (15; 18; 19) - is a valve (3) or a throughflow indicator (4) or a thermostat (5).

7. Pipe distributor system according to at least one of claims 1 to 6, **characterised in that** the pipe distributor system consists of at least one main pipe (1) for a feed and at least one main pipe (1) for the return.

8. Pipe distributor system according to at least one of claims 1 to 7, **characterised in that** the fluid consists of water.

9. Pipe distributor system according to at least one of claims 1 to 8, **characterised in that** the functional unit is provided in the form of a valve (3) with a valve seat (11) and this valve seat (11) is formed by at least one region of the main pipe (1).

10. Pipe distributor system according to claim 9, **characterised in that** the valve seat (11) is elevated relative to the inner surface of the main pipe (1) and directed towards the longitudinal axis of the main pipe (1).

11. Pipe distributor system according to claim 10, **characterised in that** the valve seat (11) is an annular bead (30), wherein the bead (30) is arranged in the region of the edge of the respectively provided opening (12) of the main pipe (1), for preference forms of the edge region.

12. Method of producing a thread at parts of a pipe distributor system according to any one of claims 1 to 11, wherein a pipe end of the connecting element (15; 18; 19) or a pipe end of the main pipe (1) is flanged in such a way that the flanged section of the pipe comes to lie like a second, outer layer (25) on the surface of the pipe and the thread is formed in this outer layer (25).

13. Method according to claim 12, **characterised in that** the thread is formed at a connection for a part volume flow.

14. Method according to claim 12, **characterised in that** the thread is formed at an axial end of the main pipe (1).

15. Method according to at least one of claims 12 to 14, **characterised in that** the thread is formed in the surface of the relevant outer layer (25) by rolling.

## Revendications

1. Système répartiteur tubulaire destiné à un écoulement de fluide, comprenant au moins une tubulure principale centrale (1) et au moins une unité fonctionnelle (3 ; 4 ; 5 ; 6 ; 7) pour vider et remplir ledit système ou pour bloquer, ouvrir ou réguler un flux volumique partiel, l'unité fonctionnelle (3 ; 4 ; 5 ; 6 ; 7) étant au moins composée de premier et second éléments partiels qui sont disposés pour l'essentiel à angle droit par rapport à l'axe principal (20) de la tubulure principale (1), et dans l'alignement l'un de l'autre, ladite tubulure principale étant pourvue, dans la région de ladite au moins une unité fonctionnelle (3 ; 4 ; 5 ; 6 ; 7) de zones élargies comportant au moins deux surfaces de jonction agencées parallèlement l'une à l'autre, sachant que
ladite tubulure principale (1) est de réalisation substantiellement plane, au moins dans la zone de jonction du second élément partiel (15 ; 18 ; 19 ; 12) à présence minimale,
**caractérisé par le fait que**
la tubulure principale (1) est réalisée, au moins dans la zone de jonction du second élément partiel (15 ; 18 ; 19 ; 12) à présence minimale, de manière qu'il ne soit pas formé de collets saillants évasés.

2. Système répartiteur tubulaire selon la revendication 1,
**caractérisé par le fait**
**qu'**au moins un élément partiel des unités fonctionnelles (3 ; 4 ; 5 ; 6 ; 7) est solidarisé par fusion avec la tubulure principale (1).

3. Système répartiteur tubulaire selon la revendication 1 ou 2,
**caractérisé par le fait que**
le second élément partiel est un élément de raccordement (15 ; 18 ; 19) dédié à un flux volumique partiel et à la conduite associée.

4. Système répartiteur tubulaire selon la revendication 1 ou 3,
**caractérisé par le fait**
**qu'**au moins l'un des éléments partiels est relié à la tubulure principale (1) de manière imperdable et étanche.

5. Système répartiteur tubulaire selon au moins l'une des revendications 1 à 4,
**caractérisé par le fait**
**qu'**au moins une partie de boîtier d'une unité fonctionnelle (3 ; 4 ; 5; 6; 7) est reliée à la tubulure principale (1) de manière imperdable et étanche.

6. Système répartiteur tubulaire selon au moins l'une des revendications 3 à 5,
**caractérisé par le fait que**
l'unité fonctionnelle (3 ; 4 ; 5 ; 6 ; 7), incluant le second élément partiel - c'est-à-dire un élément de raccordement (15 ; 18 ; 19) -, est une vanne (3) ou un afficheur de débit (4), voire un thermostat (5).

7. Système répartiteur tubulaire selon au moins l'une des revendications 1 à 6,
**caractérisé par le fait que**
ledit système répartiteur tubulaire est constitué d'au moins une tubulure principale (1) affectée à un flux d'arrivée, et d'au moins une tubulure principale (1) affectée au flux de retour.

8. Système répartiteur tubulaire selon au moins l'une des revendications 1 à 7,
**caractérisé par le fait que**
le fluide consiste en de l'eau.

9. Système répartiteur tubulaire selon au moins l'une des revendications 1 à 8,
**caractérisé par le fait que**
l'unité fonctionnelle revêt la forme d'une vanne (3) munie d'un siège d'obturation (11), et ce siège d'obturation (11) est formé par au moins une région de la tubulure principale (1).

10. Système répartiteur tubulaire selon la revendication 9,
**caractérisé par le fait que**
le siège d'obturation (11) est surélevé par rapport à la surface intérieure de la tubulure principale (1), et pointe en direction de l'axe longitudinal de ladite tubulure principale (1).

11. Système répartiteur tubulaire selon la revendication 10,
**caractérisé par le fait que**
le siège d'obturation (11) est un bourrelet annulaire (30), sachant que ledit bourrelet (30) est situé dans la région du bord de l'orifice (12) respectivement prévu dans la tubulure principale (1) et forme, de préférence, la zone marginale.

12. Procédé dévolu au façonnage d'un filetage sur des parties d'un système répartiteur tubulaire conforme à l'une des revendications 1 à 11, dans lequel
une extrémité tubulaire de l'élément de raccordement (15 ; 18 ; 19), ou une extrémité de la tubulure principale (1), est rabattue de façon telle que le tronçon rabattu de la tubulure vienne s'appliquer sur la surface de ladite tubulure à la manière d'une seconde couche extérieure (25), et que le filetage soit façonné dans cette couche extérieure (25).

13. Procédé selon la revendication 12,
**caractérisé par le fait que**
le filetage est façonné sur un raccord affecté à un flux volumique partiel.

14. Procédé selon la revendication 12,
**caractérisé par le fait que**
le filetage est façonné à une extrémité axiale de la tubulure principale (1).

15. Procédé selon au moins l'une des revendications 12 à 14,
**caractérisé par le fait que**
le filetage est façonné par roulage dans la surface de la couche extérieure (25) considérée.
